# EUROPEAN PATENT APPLICATION

(11) **EP 4 428 593 A1**
(43) Date of publication of application: **11.09.2024**
(21) Application number: 21965073.6
(22) Date of filing: 24.11.2021
(51) Int. Cl.: G02B 6/36

(54) **CONNECTOR**

(71) Applicant: Huawei Technologies Co., Ltd., Shenzhen, Guangdong 518129 (CN)
(72) Inventor: HUANG, Defu, Shenzhen, Guangdong 518129 (CN); LI, Quan, Shenzhen, Guangdong 518129 (CN); YANG, Huiming, Shenzhen, Guangdong 518129 (CN); GAO, Liang, Shenzhen, Guangdong 518129 (CN)
(74) Representative: Körber, Martin Hans
(86) International application number: PCT/CN2021/132794
(87) International publication number: WO 2023/092335

(57) **Abstract**

This application relates to a connector, and the connector includes: a first housing; and a metal coupling member, where the metal coupling member is installed in the first housing and includes a first surface and a second surface that are opposite to each other, a first hole is provided on the first surface, and a second hole is provided on the second surface. This application further relates to another connector, and the connector includes: a second housing; and a line fastening part, where the line fastening part is installed in the second housing and includes a tube part that is provided with a through hole and a projecting rim, the projecting rim is disposed on one side of the tube part, the through hole communicates with a first hole of a metal coupling member that is accommodated in a first housing, to seal an end of a line in the first hole, the metal coupling member includes a first surface and a second surface that are opposite to each other, the first hole is provided on the first surface, and a second hole is provided on the second surface.

## Description

### TECHNICAL FIELD

This application relates to a connector that can be applied to a vehicle as a connector for connecting in-vehicle cables.

### BACKGROUND

With the development of communication technologies, requirements for data transmission are increasingly high. In order to improve a data transmission speed and reduce cable costs of data transmission, a terahertz wave is increasingly used as an information carrier for communication. The terahertz wave is an electromagnetic wave whose wave band is between a millimeter wave and visible light, and an optical fiber is used as a medium for communication. Compared with conventional microwave communication that uses a cable as a medium, terahertz communication can easily implement signal transmission of more than 10 Gbps, and has advantages such as a wide spectrum resource, low quantum energy, and a large bandwidth.

A current terahertz connector assembly for connecting optical fibers together cannot ensure a stable signal connection in a vibration environment. Water and dust are prone to enter the connector to pollute the optical fibers. The connector is large in size or has high a requirement on a processing technique, which increases costs.

Therefore, a connector that can adapt to a vibration environment is required to improve stability of a signal connection and prevent water and dust from polluting an optical fiber.

### SUMMARY

In view of the foregoing problems, this application provides a connector. The connector can improve line connection reliability and maintain signal stability.

A first aspect of this application provides a connector. The connector includes: a first housing; and a metal coupling member, where the metal coupling member is installed in the first housing and includes a first surface and a second surface that are opposite to each other, a first hole is provided on the first surface, and a second hole is provided on the second surface.

According to the connector with the foregoing structure, two cables may be separately inserted into the first hole and the second hole, so that a connection between the two cables is implemented through coupling of the metal coupling member. For example, compared with a conventional manner of crimping a golden finger and a spring piece, such a connection manner can improve connection reliability and maintain signal stability. Specifically, for example, when the connector is applied to an in-vehicle scenario, if the conventional manner of crimping the golden finger and the spring piece is used, the spring piece may be elastically deformed when a vehicle vibrates, so that the spring piece is separated from the golden finger temporarily, resulting in signal instability. However, according to the connector in the first aspect of this application, the cables are inserted into the first hole and the second hole to implement the connection. Therefore, the cables can be relatively stably kept in the holes, which improves connection reliability and signal stability.

In addition, the cables are inserted into the holes, and a signal is transmitted via the metal coupling member through contact with inner walls of the holes, so that a transmission loss can be reduced, and the signal stability can be improved.

Furthermore, the two cables perform a signal connection through coupling of the metal coupling member and may not be in direct contact, which is conducive to waterproofing and dustproofing.

In a possible implementation, the first hole and/or the second hole include/includes tapered hole parts/a tapered hole part.

According to the foregoing disposing, a contact area between the cables and the metal coupling member can be increased, a transmission loss can be reduced, and coupling efficiency can be increased. In some embodiments, transmission with a loss less than 2.5 dB/end can be implemented.

In a possible implementation, the first hole and/or the second hole are/is blind holes/a blind hole.

In other words, the first hole does not communicate with the second hole, so that water and dust can be prevented from entering the second hole from the first hole or from entering the first hole from the second hole, which improves waterproof and dustproof effects.

In a possible implementation, a first metal shielding layer is disposed between the metal coupling member and the first housing.

According to the foregoing disposing, electromagnetic compatibility (Electromagnetic Compatibility, EMC) performance can be improved, interference of a cable that is coupled to the metal coupling member to another device is reduced, and an anti-interference degree of the cable to another device is improved.

In a possible implementation, a hoop is disposed around an opening of the first hole.

According to the foregoing disposing, the metal coupling member can be fastened inside the first housing, an installation manner is simple, and an installation structure is reliable.

In a possible implementation, a collar is further included, and the collar is located in the second hole.

According to the foregoing disposing, a cable can be firmly fastened in the first hole, to ensure an attaching degree between the cable and the metal coupling member, so that poor contact between the cable and the metal coupling member caused by vibration is further prevented, and signal transmission quality is improved. The collar can be closely attached to an end part of the cable, to prevent water, dust, and the like from entering the second hole to pollute a contact surface between the cable and the second hole, so that oxidation and corrosion of a part in the second hole of the metal coupling member are avoided.

In a possible implementation, the first housing is of a plastic material.

According to the foregoing disposing, assembly and fastening between the metal coupling member and the first housing are facilitated, an assembly manner is simple, material costs are low, and large-scale production and assembly are easy.

In a possible implementation, the metal coupling member is made of copper.

According to the foregoing disposing, signal transmission efficiency can be improved.

A second aspect of this application provides a connector. The connector includes: a second housing; and a line fastening part, where the line fastening part is installed in the second housing and includes a tube part that is provided with a through hole and a projecting rim, the projecting rim is disposed on one side of the tube part, the through hole communicates with a first hole of a metal coupling member that is installed in a first housing, to seal a line in the first hole, the metal coupling member includes a first surface and a second surface that are opposite to each other, the first hole is provided on the first surface, and a second hole is provided on the second surface.

The line fastening part is configured to be connected to a cable. According to the connector with the foregoing structure, a line inserted into the first hole may be installed in the second housing by using the line fastening part, and then the line inserted into the first hole is coupled to a line inserted into the second hole by using the metal coupling member, so that a connection between two cables (that is, lines) is implemented. For example, compared with a conventional manner of crimping a golden finger and a spring piece, such a connection manner can improve connection reliability and maintain signal stability. Specifically, for example, when the connector is applied to an in-vehicle scenario, if the conventional manner of crimping the golden finger and the spring piece is used, the spring piece may be elastically deformed when a vehicle vibrates, so that the spring piece is separated from the golden finger temporarily, resulting in signal instability. However, according to the connector in the second aspect of this application, the cables are inserted into the first hole and the second hole to implement the connection. Therefore, the cables can be relatively stably kept in the holes, which improves connection reliability and signal stability.

In addition, the cables are inserted into the holes, and a signal is transmitted via the metal coupling member through contact with inner walls of the holes, so that a transmission loss can be reduced, and the signal stability can be improved.

Furthermore, the two cables perform a signal connection through coupling of the metal coupling member and may not be in direct contact, which is conducive to waterproofing and dustproofing.

In a possible implementation, the line fastening part is constructed as a step flange plate.

A part with a smaller diameter of a step flange plate structure can attach an inner wall of the second housing, and a part with a larger diameter of the step flange plate structure can match the inner wall of the second housing, so that one end of the cable can be sealed in the first hole. Therefore, oxidation and corrosion of a part in the first hole of the metal coupling member are avoided. The step flange plate structure is simple, which facilitates assembly and processing.

In a possible implementation, a metal pin is further included, and the metal pin is fastened to the second housing and extends outward relative to the second housing.

In a possible implementation, a second metal shielding layer is disposed on a hole wall of the through hole.

According to the foregoing disposing, electromagnetic compatibility (Electromagnetic Compatibility, EMC) performance can be improved, interference of a cable that is coupled to the metal coupling member to another device is reduced, and an anti-interference degree of the cable to another device is improved.

A third aspect of this application provides a signal line. The signal line includes a line body and the connector provided in the first aspect and any one of possible implementations of the first aspect of this application, or includes a line body and the connector provided in the second aspect and any one of possible implementations of the second aspect of this application, where an end part of the line body is inserted into a first hole or a second hole.

In a possible implementation, the end part of the line body includes a tapered part.

According to the foregoing disposing, a contact area between a cable and a metal coupling member can be increased, and a transmission loss can be reduced. In some embodiments, transmission with a loss less than 2.5 dB/end can be implemented.

In a possible implementation, the line body includes a plastic optical fiber.

A structure of the plastic optical fiber may prevent dust from entering the plastic optical fiber to affect signal transmission quality.

A fourth aspect of this application provides a connector. The connector includes the connector provided in the first aspect and any one of possible implementations of the first aspect of this application and the connector provided in the second aspect and any one of possible implementations of the second aspect of this application.

According to the collar disposed in the second hole of the metal coupling member and the step flange plate that are provided in this application, ends of a plastic fiber can be separately sealed in the first hole and the second hole, to prevent dust and water from entering the plastic fiber to pollute a contact surface between the plastic fiber and the metal coupling member. The plastic fiber that is constructed as a solid fiber may also prevent dust from entering the plastic fiber to affect signal transmission quality. The first hole and/or the second hole that have/has a tapered part can increase a contact area between the plastic fiber and the metal coupling member, to reduce a transmission loss. The first housing and the second housing of this application are made of plastic, have a reliable installation manner, simple manufacturing, and low costs, and are easy to be produced and assembled on a large scale.

### BRIEF DESCRIPTION OF DRAWINGS

The following further describes features of the present invention and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in this specification, same reference numerals represent same content. The specific accompanying drawings are described as follows:
FIG. 1 is a schematic diagram of a structure of a connector in which a plastic fiber is installed according to an embodiment of this application;
FIG. 2 is a sectional view of FIG. 1;
FIG. 3 is a diagram of FIG. 2 from another angle;
FIG. 4 is an exploded view of a connector according to an embodiment of this application;
FIG. 5 is a schematic diagram of a structure of another connector in which a plastic fiber is installed according to an embodiment of this application;
FIG. 6 is a sectional view of FIG. 5;
FIG. 7 is a diagram of FIG. 5 from another angle;
FIG. 8 is an exploded view of still another connector in which a plastic fiber is installed according to an embodiment of this application;
FIG. 9 is a schematic diagram of a structure in which a connector shown in FIG. 1 and another connector shown in FIG. 5 are installed together; and
FIG. 10 is a sectional view of FIG. 9.

### DESCRIPTION OF EMBODIMENTS

A connector provided in embodiments of this application may be applied to, for example, a connection between wires in a vehicle, for example, a connection between terahertz plastic fibers that are used for transmitting a terahertz wave.

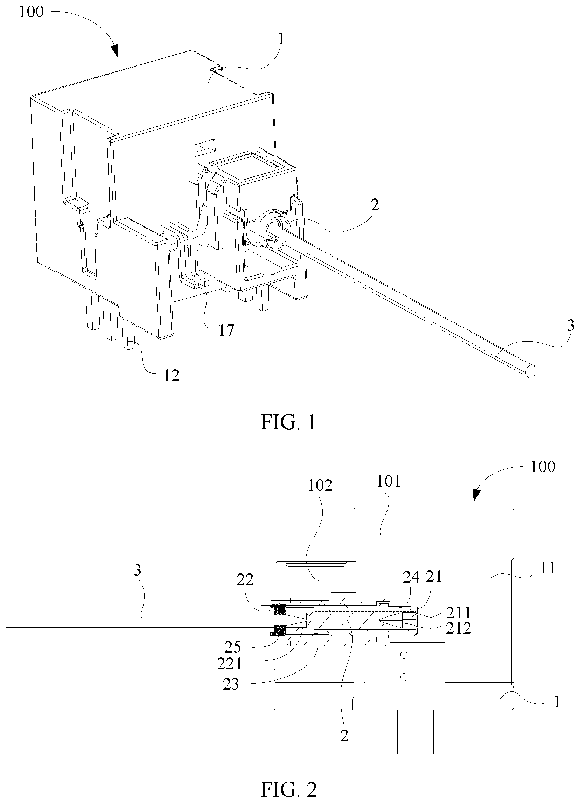

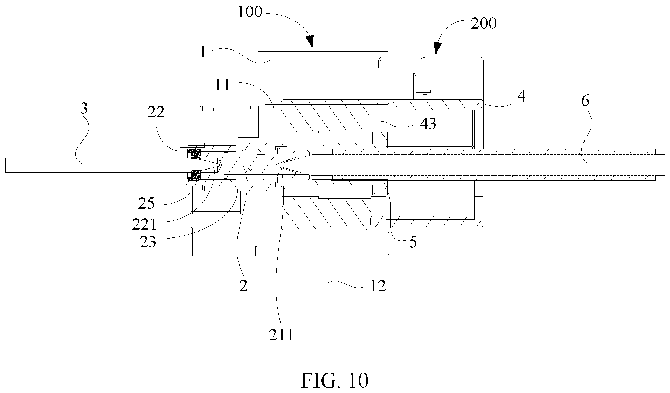

FIG. 1 is a schematic diagram of a structure of a connector 100 in which a plastic fiber 3 is installed according to an embodiment of this application. A connector 100 (also referred to as a board end connector or a female connector) provided in an embodiment of this application may be configured to be connected to a circuit board of a controller. As shown in FIG. 1, the connector provided in this embodiment of this application includes a first housing 1 and a metal coupling member 2. The metal coupling member 2 may be configured to be connected to the plastic fiber 3. FIG. 2 is a sectional view of the connector 100 shown in FIG. 1. As shown in FIG. 2, the metal coupling member 2 is installed in the first housing 1. The metal coupling member 2 includes a first surface 21 and a second surface 22 that are opposite to each other. Afirst hole 211 that is configured to be inserted by a first plastic fiber 6 (referring to FIG. 10) is disposed on the first surface 21. A second hole 221 that is configured to be inserted by a second plastic fiber 3 is disposed on the second surface 22.

Two cables (for example, the first plastic fiber 6 and the second plastic fiber 3) are separately inserted into the first hole 211 and the second hole 221 that are of the metal coupling member 2, so that a signal connection between the cables can be implemented through coupling of the metal coupling member 2.

For example, compared with a conventional manner of crimping a golden finger and a spring piece, such a connection manner can improve connection reliability and maintain signal stability. Specifically, for example, when the connector is applied to an in-vehicle scenario, if the conventional manner of crimping the golden finger and the spring piece is used, the spring piece may be elastically deformed when a vehicle vibrates, so that the spring piece is separated from the golden finger temporarily, resulting in signal instability. However, according to the connector 100 in the first aspect of this application, the cables are inserted into the first hole 211 and the second hole 221 to implement the connection. Therefore, the cables can be relatively stably kept in the holes, which improves connection reliability and signal stability.

In addition, the cables are inserted into the holes, and a signal is transmitted via the metal coupling member through contact with inner walls of the holes, so that a transmission loss can be reduced, and the signal stability can be improved.

Furthermore, the two cables perform a signal connection through coupling of the metal coupling member 2 and may not be in direct contact, which is conducive to waterproofing and dustproofing.

In the embodiment shown in FIG. 1, the metal coupling member 2 is accommodated in the first housing 1, to implement fastening between the metal coupling member 2 and the first housing 1, so that fastening between the cable and the connector 100 is implemented. When the connector 100 is applied to a connection between wires that transmit a terahertz wave in a vehicle, poor contact between the wire and the metal coupling member 2 caused by vehicle vibration can be prevented, which improves signal transmission quality.

In some embodiments, as shown in FIG. 1, the first hole 211 and/or the second hole 221 are/is blind holes/a blind hole. To be specific, the first hole 211 does not communicate with the second hole 221. In this way, water or dust can be prevented from entering the second hole 221 from the first hole 211 or from entering the first hole 211 from the second hole 221, which improves waterproof and dustproof effects.

In some embodiments, as shown in FIG. 2 and FIG. 10, the metal coupling member 2 may be a thin and long column. The first hole 211 and the second hole 221 are separately provided on end surfaces of two ends of the column, and the first hole 211 and/or the second hole 221 include/includes tapered hole parts 212/a tapered hole part. Correspondingly, an end part of the first plastic fiber 6 that is inserted into the first hole 211 and an end part of the second plastic fiber 3 that is inserted into the second hole 221 are cut into tapered shapes in advance. Outer circumferential surfaces of the tapered end parts of the plastic fibers are attached to inner circumferential surfaces of tapered parts of the first hole 211 and the second hole 221 respectively, so that a contact area between the plastic fibers and the metal coupling member can be effectively increased, and transmission with a low loss can be implemented, for example, transmission with a transmission between ends with a loss less than 2.5 dB is implemented/end is implemented.

In some embodiments, the metal coupling member 2 may alternatively be of another shape, for example, approximately be of a shape of a cuboid or a triangular prism. The first hole 211 and/or the second hole 221 may alternatively be of a cylindrical shape, a prism shape, or the like. Correspondingly, end parts of the first plastic fiber 6 that is inserted into the first hole 211 and the second plastic fiber 3 that is inserted into the second hole 221 are cut into cylindrical shapes, prism shapes, or the like in advance. Outer circumferential surfaces of the end parts that are of the cylindrical shapes, the prism shapes, or the like and are of the plastic fibers are attached to inner circumferential surfaces of parts that are of cylindrical shapes or prism shapes and are of the first hole 211 and the second hole 221 respectively.

Optionally, the plastic fiber may be a solid fiber made of a material with a low dielectric constant, and a solid fiber structure may prevent dust from entering the solid fiber to affect signal transmission quality of the plastic fiber. Optionally, the metal coupling member 2 is made of copper. It may be understood that the metal coupling member 2 may alternatively be made of another metal.

In some embodiments, as shown in FIG. 2, the connector further includes a collar 25. The collar 25 is located in the second hole 221 and is configured to seal a gap between the second plastic fiber 3 and the second hole 221. The collar 25 may be made of plastic. Before the second plastic fiber 3 is inserted into the second hole 221, the collar 25 may be sleeved at one end of the second plastic fiber 3, and then the second plastic fiber 3 is inserted into the second hole 221, so that the collar 25 is fastened in the second hole 221. In addition, the second plastic fiber 3 is also fastened to the metal coupling member 2 by using the collar 25. According to this fastening manner, in one aspect, attaching and fastening between the plastic fiber and the metal coupling member 2 is ensured, to prevent poor contact caused by vibration from affecting quality of a signal transmitted through a terahertz wave. In another aspect, the collar 25 can prevent water from entering the second hole 221, to prevent external dust and dirt from polluting a contact surface between the plastic fiber and the metal coupling member 2.

In some embodiments, as shown in FIG. 2, a first metal shielding layer 23 may further be disposed between the metal coupling member 2 and the first housing 1, to shield another electromagnetic signal. The first metal shielding layer 23 may be sleeved on an outer circumference of the metal coupling member 2, so that electromagnetic compatibility performance of the connector is improved, interference caused by a cable coupled to the metal coupling member 2 to another device is reduced, and an anti-interference degree of the cable coupled to the metal coupling member 2 to another device is also improved. Optionally, the first metal shielding layer 23 is made of copper. In addition, optionally, the first metal shielding layer 23 is grounded.

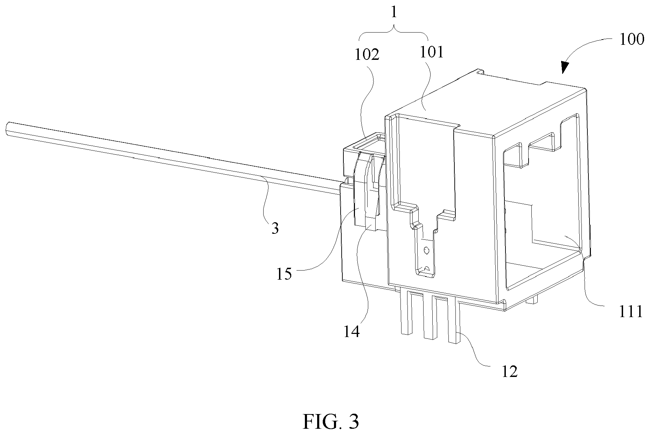

In some embodiments, as shown in FIG. 3, a hoop 24 may be disposed around an opening of the first hole 211 and is configured to fasten the metal coupling member 2 in the first housing 1. The hoop 24 may be an annular part having a step on an outer circumference of the hoop 24, an inner circumference of the hoop 24 is connected to the first hole 211, and a step part of the hoop 24 can abut against an inner wall of the first housing 1.

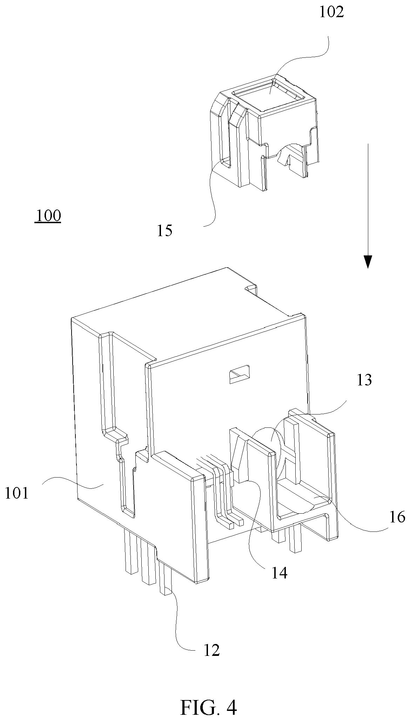

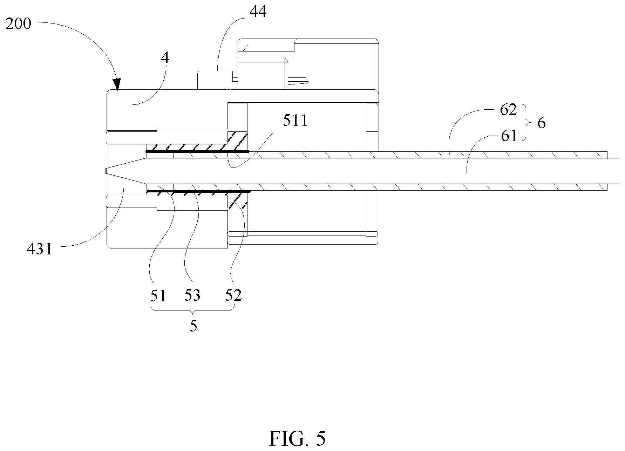

In some embodiments, as shown in FIG. 3 and FIG. 4, the first housing 1 may include a housing body 101 and a fastener 102 configured to fasten the metal coupling member 2 in the housing body 101. The housing body 101 includes a first chamber 11, and the first chamber 11 includes a first opening 111 and a second opening 13 that are opposite to each other in opening directions. The first opening 111 is used to receive a second housing 4 (refer to FIG. 5) of a male connector 200, so that the first plastic fiber 6 (refer to FIG. 10) fastened in the male connector 200 is coupled to the first hole 211 of the metal coupling member 2. The second opening 13 is used to fasten the metal coupling member 2. A support part 16 that supports the metal coupling member 2 may be disposed at the second opening 13, and the support part 16 extends out of the first housing relative to the second opening 13.

As shown in FIG. 2 and FIG. 3, the fastener 102 can partially surround the metal coupling member 2, and retainer rings 15 are disposed on two sides of the fastener 102. As shown in FIG. 4, protrusions 14 that match the retainer rings 15 are disposed on two sides of the support part 16 of the second opening 13, and the protrusions 14 have bevels. When the housing body 101, the metal coupling member 2, and the fastener 102 are assembled, the metal coupling member 2 is first inserted into the second opening 13, and a step part of the metal coupling member 2 abuts against an inner wall of the housing body 101. Then pressure is applied to the fastener 102 in an arrow direction in FIG. 4, so that the retainer rings 15 abut against the bevels of the protrusions 14, and deform under an action of the bevels until the protrusions 14 are completely located in the retainer rings 15.

In some embodiments, the first housing 1 may be of a plastic material, and the housing body 101 and the fastener 102 may deform during installation and combination, to ensure installation reliability. In addition, an installation process is simple, a process is simple to be implemented, costs are low, and large-scale production and installation are easy.

As shown in FIG. 1 to FIG. 4, metal fastening pins 12 are further disposed on the housing body 101. The metal fastening pins 12 are configured to fasten the first housing 1 of the connector 100 to a circuit board. The metal fastening pins 12 extend outward relative to the housing body 101. Electrical contact pins 17 are further disposed on the housing body 101 and are configured to be electrically connected to the male connector 200 (refer to FIG. 10).

FIG. 5 is a sectional view of another connector according to an embodiment of this application. As shown in FIG. 5, a connector 200 (also referred to as a male connector or a line end connector) includes a second housing 4 and a line fastening part 5 configured to fasten a first plastic fiber 6. The line fastening part 5 is installed in the second housing 4 and is constructed in a flange plate shape. Specifically, the line fastening part 5 includes a tube part 53 that is provided with a through hole 51 and a projecting rim 52, and the projecting rim 52 is disposed at one end of the tube part 53. One end of the first plastic fiber 6 is inserted into the through hole 51, and then the line fastening part 5 is inserted into the second housing 4, to clamp the line fastening part 5 between the first plastic fiber 6 and the second housing 4, so that the first plastic fiber 6 is fastened to the second housing 4. When the connector 200 is configured for a connection between cables used to transmit a terahertz wave in a vehicle, poor contact between the cables and a metal coupling member 2 caused by vehicle vibration can be prevented, and quality of a signal transmitted by the cables is improved.

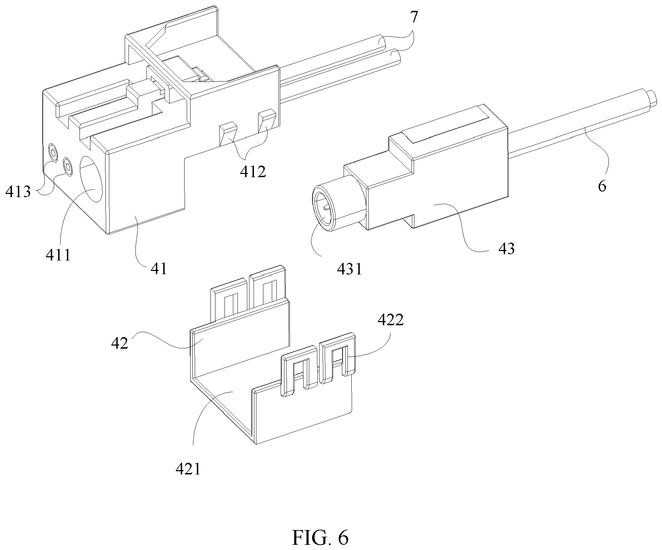

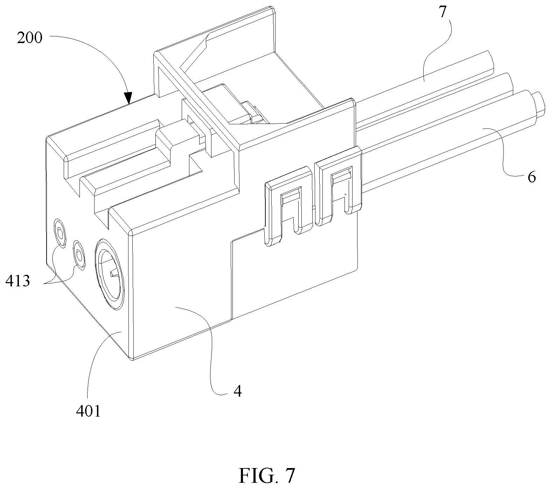

As shown in FIG. 6, the second housing 4 may include a second housing body 41, fastening pieces 42, and a sub-connector 43. As shown in FIG. 5, FIG. 7, and FIG. 8, the sub-connector 43 is configured to accommodate the line fastening part 5, and the sub-connector 43 can be inserted into the second housing body 41. The fastening pieces 42 are configured to fasten the sub-connector 43 in the second housing body 41.

As shown in FIG. 5 and FIG. 6, a sub-connector hole 411 for installing the sub-connector 43 is provided in the second housing body 41. A plugging fastener 44 that matches a female connector 100 and lockers 412 that match the fastening pieces 42 and protrude from the second housing body 41 are disposed outside the second housing body 41.

As shown in FIG. 5 and FIG. 6, an outer circumference of the sub-connector 43 may be in a step shape, and the sub-connector 43 can be partially inserted into the sub-connector hole 411. Correspondingly, the sub-connector hole 411 matches an outer circumferential shape of the sub-connector 43, and is also in the step shape. A line fastening part through hole 431 is provided in the sub-connector 43, and the line fastening part through hole 431 includes a part that matches an outer circumferential shape of the line fastening part 5, for example, a part with a smaller diameter and a part with a larger diameter are included. The part with a smaller diameter is attached to an outer circumference of the tube part 53 of the line fastening part 5, and the part with a larger diameter abuts against the projecting rim 52, so that the line fastening part 5 is fastened in the line fastening part through hole 431.

As shown in FIG. 6, the fastening pieces 42 include an encircling part 421, and the encircling part 421 can partially encircle the sub-connector 43 and the second housing body 41. Lock rings 422 are disposed at an edge of the encircling part 421 and can be sleeved on the lockers 412.

As shown in FIG. 6 to FIG. 8, when the second housing body 41, the fastening pieces 42, and the sub-connector 43 are fastened together, the sub-connector 43 is partially inserted into the sub-connector hole 411 of the second housing body 41. The encircling part 421 of the fastening pieces 42 encircles the sub-connector 43 and the second housing body 41. The lock rings 422 at the edge of the encircling part 421 are sleeved on the lockers 412, and inner edges of the lock rings 422 abut against the lockers 412.

In some embodiments, the second housing body 41 is provided with electrical contact holes 413 used to install cables 7, and the cables 7 are fastened in the electrical contact holes 413 by using lock pieces inside the electrical contact holes 413.

In some embodiments, as shown in FIG. 5 and FIG. 6, the first plastic fiber 6 includes an inner core 61 and a cladding medium 62. An end of the inner core 61 is in a sharp cone shape, and one end that is of the first plastic fiber 6 and that is in a sharp cone shape is inserted into the through hole 51 of the line fastening part 5 from one end of the projecting rim 52 of the line fastening part 5, and is attached to a hole wall of a first hole 211 of the metal coupling member 2. The first plastic fiber 6 closely matches the through hole 51, so that the first plastic fiber 6 can be fastened in the second housing 4, and quality of a signal transmitted by a terahertz wave is prevented from being affected by poor contact caused by vibration. A structure of the projecting rim 52 of the line fastening part 5 can seal the inner core 61 of the first plastic fiber 6 in the first hole 211, to prevent water from entering the first hole 211 and prevent external dust and dirt from polluting a contact surface between the first plastic fiber and the metal coupling member 2.

In some embodiments, as shown in FIG. 5, a second metal shielding layer 511 may be disposed on a hole wall of the through hole 51. Electromagnetic compatibility performance of the connector is improved, interference caused by the first plastic fiber 6 coupled to the metal coupling member 2 to another device is reduced, and an anti-interference degree of the first plastic fiber 6 coupled to the metal coupling member 2 to another device is also improved. Optionally, the second metal shielding layer 511 is made of copper. In addition, optionally, the second metal shielding layer 511 is grounded.

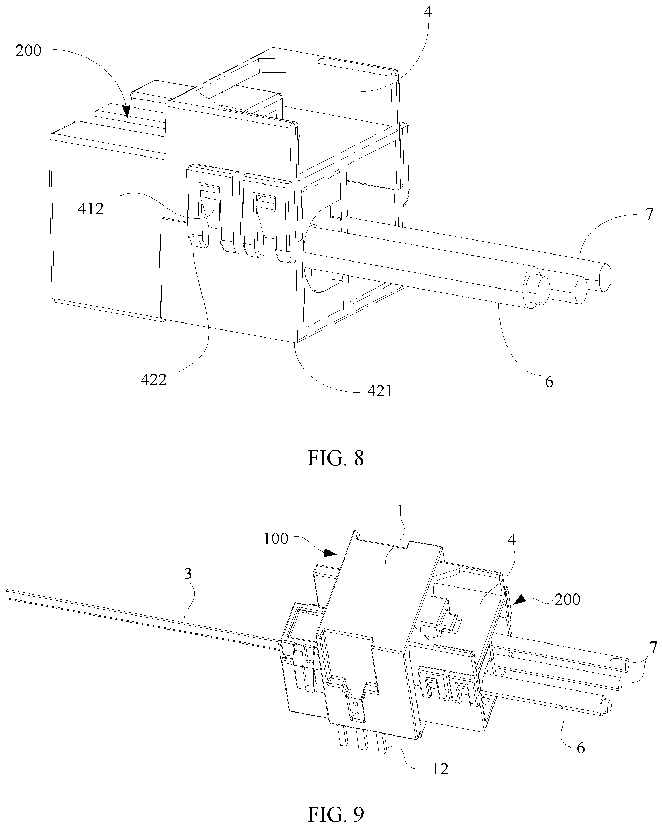

FIG. 9 and FIG. 10 respectively show a schematic diagram and a sectional view of combining a male connector 200 and a female connector 100 together. As shown in FIG. 9 and FIG. 10, the second plastic fiber 3 is fastened to the second hole 221 of the metal coupling member 2 in the first housing 1 by using the collar 25. The first plastic fiber 6 is fastened in the second housing 4 by using the line fastening part 5. The second housing 4 is inserted into the first chamber 11 of the first housing 1 by using the first opening 111. One end that is of the metal coupling member 2 and that is provided with the first hole 211 can be inserted into the sub-connector hole of the sub-connector 43, so that a tapered end part of the first plastic fiber 6 is attached to the hole wall of the first hole 211, which implements coupling between the first plastic fiber 6 and the second plastic fiber 3.

In this specification and claims, the terms "first", "second", and the like are merely used to distinguish between similar objects, and do not represent a specific order of the objects. It may be understood that specific orders or sequences may be exchanged if permitted, so that the embodiments of this application described herein can be implemented in an order other than an order illustrated or described herein.

The term "include" used in this specification and claims should not be construed as being limited to the content listed below, and does not exclude other elements or steps. It should be construed as specifying existence of a mentioned feature, whole, step, or part, but does not preclude existence or addition of one or more other features, wholes, steps, or parts and their groups. Therefore, the expression "a device including an apparatus A and an apparatus B" should not be limited to a device including only the components A and B.

"One embodiment" or "an embodiment" mentioned in this specification means that a particular feature, structure, or characteristic described in combination with the embodiment is included in at least one embodiment of this application. Therefore, the terms "in one embodiment" or "in an embodiment" that appear in this specification do not necessarily indicate a same embodiment, but may indicate a same embodiment. Further, in one or more embodiments, the particular features, structures, or properties can be combined in any proper manner, as will be clear from this disclosure to a person of ordinary skill in the art.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A connector, comprising:
a first housing; and
a metal coupling member, wherein the metal coupling member is installed in the first housing and comprises a first surface and a second surface that are opposite to each other, a first hole is provided on the first surface, and a second hole is provided on the second surface.

2. The connector according to claim 1, wherein the first hole and/or the second hole comprise/comprises tapered hole parts/a tapered hole part.

3. The connector according to claim 1 or 2, wherein the first hole and/or the second hole are/is blind holes/a blind hole.

4. The connector according to any one of claims 1 to 3, wherein a first metal shielding layer is disposed between the metal coupling member and the first housing.

5. The connector according to any one of claims 1 to 4, wherein a hoop is disposed around an opening of the first hole.

6. The connector according to any one of claims 1 to 5, wherein the connector further comprises a collar, and the collar is located in the second hole.

7. The connector according to any one of claims 1 to 6, wherein the first housing is of a plastic material.

8. The connector according to any one of claims 1 to 7, wherein the metal coupling member is made of copper.

9. A connector, comprising:
a second housing; and
a line fastening part, wherein the line fastening part is installed in the second housing and comprises a tube part that is provided with a through hole and a projecting rim, the projecting rim is disposed on one side of the tube part, the through hole communicates with a first hole of a metal coupling member that is installed in a first housing, to seal a line in the first hole, the metal coupling member comprises a first surface and a second surface that are opposite to each other, the first hole is provided on the first surface, and a second hole is provided on the second surface.

10. The connector according to claim 9, wherein the line fastening part is constructed as a step flange plate.

11. The connector according to claim 9 or 10, wherein the connector further comprises a metal pin, and the metal pin is fastened to the second housing and extends outward relative to the second housing.

12. The connector according to any one of claims 9 to 11, wherein a second metal shielding layer is disposed on a hole wall of the through hole.

13. A signal line, comprising a line body and the connector according to any one of claims 1 to 12, wherein an end part of the line body is inserted into the first hole or the second hole.

14. The signal line according to claim 13, wherein the end part of the line body comprises a tapered part.

15. The signal line according to claim 13 or 14, wherein the line body comprises a plastic optical fiber.
